# EUROPEAN PATENT APPLICATION

(11) **EP 4 628 257 A2**
(43) Date of publication of application: **08.10.2025**
(21) Application number: 25165933.0
(22) Date of filing: 25.03.2025
(51) Int. Cl.: B24B 39/04

(54) **MULTI-AXIS DEEP ROLLING TOOL FOR HOLLOW FAN BLADE COMPLEX EDGE BASE ENHANCING CORROSION RESTISTANCE**

(30) Priority: 02.04.2024 US 202418624579
(71) Applicant: RTX Corporation, Farmington, CT 06032 (US)
(72) Inventor: Greenbank, Samuel, Vernon (US); Wysocki, Joseph B., Somers (US); El-Wardany, Tahany, Vernon (US); Salva, Randy P., Baltic (US); Gesch, Michael Thomas, Marshall (US); Frisk, Kenneth A., West Hartford (US); Rizzo, John P., Vernon (US)
(74) Representative: Schmitt-Nilson Schraud Waibel Wohlfrom Patentanwälte Partnerschaft mbB

(57) **Abstract**

A multi-axis deep rolling tool for deep rolling a workpiece including a roller tool comprising an adaptor plate; a multi-axis measurement unit attached to the adaptor plate; an arm mount attached to the multi-axis measurement unit; an arm attached to the arm mount, the arm comprising an adapter end proximate the arm mount, the arm comprising a roller end opposite the adapter end; a cartridge assembly attached to the arm proximate the roller end, the cartridge assembly including a rolling element insertable within the cartridge assembly, the rolling element configured to contact the workpiece.

## Description

The present disclosure is directed to a system for deep rolling surfaces of a fan blade. Particularly, a multi-axis deep rolling (DR) tool having a tool cartridge, a support arm and a multi-axis force measurement system.

Mechanical surface treatments are applied to alter surface strength & enhance fatigue life. Deep Rolling (DR) is a type of surface treatment. The Deep Rolling process uses a roller to roll the surface under controlled load & speed. The rolling pressure induces a deep layer of compressive residual stress. Mechanical surface treatments, such as Deep Rolling, shot peening and laser shock peening, can significantly improve the fatigue behavior of highly stressed metallic components. Deep rolling is particularly attractive since it is possible to generate, near the surface, deep compressive residual stresses and work hardened layers while retaining a relatively smooth surface finish.

Hydraulic burnishing tools for complex geometries utilize a ball bearing at the end of an axisymmetric, hydraulically actuated shaft. However, this tool is expensive and it involves complex processing steps. Further, despite its relatively high precision, the small surface area of a ball bearing unnecessarily slows production time and throughput. These known tools also cannot be readily used with widely available machine tools due to the need to maintain and constantly adjust hydraulic pressure on the bearing surface. In addition, there is a need for a post processing to clean the treated surface from the oil residue left on the surface.

An alternative process includes a dry deep rolling process, which can induce high compressive stresses up to 1.5 mm depth from the surface of a material through localized plastic deformation to prevent corrosion pits, foreign object damage, and crack initiation.

Controlling the contact stress between the roller and material being processed is important to achieving desired improvements in material properties. With insufficient contact stress, little or no improvement will be achieved. In addition, there is also a need to customize the applied load and consequently the contact stress along the deep rolling path. Too high of a contact stress can damage the material on/near the surface resulting in a decrement in properties. Avoiding collision between the deep rolling tool and the fan blade is desired to prevent the creation of defects in the blade or scrapping the blade.

In accordance with the present disclosure, there is provided a multi-axis deep rolling tool for deep rolling a workpiece comprising a roller tool comprising an adaptor plate; a multi-axis measurement unit attached to the adaptor plate; an arm mount attached to the multi-axis measurement unit; an arm attached to the arm mount, the arm comprising an adapter end proximate the arm mount, the arm comprising a roller end opposite the adapter end; a cartridge assembly attached to the arm proximate the roller end, the cartridge assembly including a rolling element insertable within the cartridge assembly, the rolling element configured to contact the workpiece.

Particular embodiments further may include at least one, or a plurality of, the following optional features, alone or in combination with each other:

A further embodiment of any of the foregoing embodiments may additionally and/or alternatively include the multi-axis measurement unit comprises a base plate attached to the adaptor plate; a pivot plate attached to the adaptor plate; a central sliding pivot in operative communication between the base plate and the pivot plate, the central sliding pivot mounted within a pivot point joint formed in the base plate; and at least one load cell mounted between the base plate and the pivot plate.

A further embodiment of any of the foregoing embodiments may additionally and/or alternatively include the multi-axis deep rolling tool for deep rolling a workpiece further comprising a dynamic force controller in operative communication with the at least one load cell, the dynamic force controller configured to monitor rolling element applied forces to the workpiece during the deep rolling.

A further embodiment of any of the foregoing embodiments may additionally and/or alternatively include the cartridge assembly comprises at least one radial bearing supporting a shaft of the rolling element; and a thrust bearing supporting the shaft of the rolling element proximate a base end of the rolling element, the base end being opposite a ball end of the rolling element.

A further embodiment of any of the foregoing embodiments may additionally and/or alternatively include the rolling element comprises a monolithic rod configuration having a shaft forming a solid cylinder-shaped bar extending axially from a base end to a ball end.

A further embodiment of any of the foregoing embodiments may additionally and/or alternatively include the rolling element comprises a two-part configuration having a detachable interchangeable tooling ball inserted into a tooling ball receiver formed in a shaft proximate a ball end of the shaft, the ball end being opposite a base end of the shaft.

A further embodiment of any of the foregoing embodiments may additionally and/or alternatively include the rolling element comprises a ball tip configured to contact a target area point of contact on the workpiece, the ball tip including a spherical shape.

In accordance with the present disclosure, there is provided a system for deep rolling a fan blade comprising a roller tool comprising an adaptor plate; a multi-axis measurement unit attached to the adaptor plate; an arm mount attached to the multi-axis measurement unit; an arm attached to the arm mount, the arm comprising an adapter end proximate the arm mount, the arm comprising a roller end opposite the adapter end; and a cartridge assembly attached to the arm proximate the roller end, the cartridge assembly including a rolling element insertable within the cartridge assembly, the rolling element configured to contact the fan blade.

Particular embodiments further may include at least one, or a plurality of, the following optional features, alone or in combination with each other:

A further embodiment of any of the foregoing embodiments may additionally and/or alternatively include the cartridge assembly comprises a detachable cartridge holder, the detachable cartridge holder configured removable, wherein different styles of detachable cartridge holder can be substituted, the detachable cartridge holder including a rolling angle, the rolling angle formed between a rolling element axis and an arm axis.

A further embodiment of any of the foregoing embodiments may additionally and/or alternatively include the cartridge assembly comprises at least one radial bearing supporting a shaft of the rolling element; and a thrust bearing supporting the shaft of the rolling element proximate a base end of the rolling element, the base end being opposite a ball end of the rolling element.

A further embodiment of any of the foregoing embodiments may additionally and/or alternatively include a thrust bearing being configured for rotation of the shaft about a shaft axis to accommodate axial bearing loads as the rolling element presses against a point of contact on the fan blade, the shaft being configured to rotate within the at least one radial bearing and the thrust bearing around the shaft axis.

A further embodiment of any of the foregoing embodiments may additionally and/or alternatively include the rolling element comprises a monolithic rod configuration having a shaft forming a solid cylinder-shaped bar extending axially from a base end to a ball end; or a two-part configuration having a detachable interchangeable tooling ball inserted into a tooling ball receiver formed in a shaft proximate a ball end of the shaft, the ball end being opposite a base end of the shaft.

A further embodiment of any of the foregoing embodiments may additionally and/or alternatively include the rolling element comprises a ball tip configured to contact a target area point of contact on the fan blade, the ball tip including a spherical shape.

A further embodiment of any of the foregoing embodiments may additionally and/or alternatively include a process for forming a multi-axis deep rolling tool for deep rolling a workpiece comprising forming a roller tool comprising an adaptor plate; attaching a multi-axis measurement unit to the adaptor plate; attaching an arm mount to the multi-axis measurement unit; attaching an arm to the arm mount, the arm comprising an adapter end proximate the arm mount, the arm comprising a roller end opposite the adapter end; attaching a cartridge assembly to the arm proximate the roller end, the cartridge assembly including a rolling element insertable within the cartridge assembly, the rolling element configured to contact the workpiece.

Particular embodiments further may include at least one, or a plurality of, the following optional features, alone or in combination with each other:

A further embodiment of any of the foregoing embodiments may additionally and/or alternatively include the process further comprising forming at least one stiffener in the arm proximate the midspan portion; and extending the stiffener radially relative to a longitudinal axis of the arm.

A further embodiment of any of the foregoing embodiments may additionally and/or alternatively include forming the multi-axis measurement unit comprises forming a base plate; attaching the base plate to the adaptor plate; attaching a pivot plate to the adaptor plate; locating a central sliding pivot in operative communication between the base plate and the pivot plate; mounting the central sliding pivot within a pivot point joint formed in the base plate; and mounting at least one load cell between the base plate and the pivot plate.

A further embodiment of any of the foregoing embodiments may additionally and/or alternatively include the process further comprising forming an integral axel in the roller disk support; and configuring the integral axel to support the roller disk.

A further embodiment of any of the foregoing embodiments may additionally and/or alternatively include the process further comprising connecting a dynamic force controller in operative communication with the at least one load cell, the dynamic force controller configured to monitor rolling element applied forces to the workpiece during the deep rolling.

A further embodiment of any of the foregoing embodiments may additionally and/or alternatively include the process further comprising forming the cartridge assembly comprising supporting a shaft of the rolling element with at least one radial bearing; and supporting the shaft of the rolling element with a thrust bearing proximate a base end of the rolling element, the base end being opposite a ball end of the rolling element.

A further embodiment of any of the foregoing embodiments may additionally and/or alternatively include the process further comprising forming the rolling element comprising forming a two-part configuration having a detachable interchangeable tooling ball inserted into a tooling ball receiver formed in a shaft proximate a ball end of the shaft, the ball end being opposite a base end of the shaft.

A further embodiment of any of the foregoing embodiments may additionally and/or alternatively include the process further comprising forming the rolling element comprising forming a ball tip configured to contact a target area point of contact on the workpiece, the ball tip including a spherical shape.

Other details of the multi-axis deep rolling tool are set forth in the following detailed description and the accompanying drawings wherein like reference numerals depict like elements.
FIG. 1 is a perspective view of a dovetail root portion of a gas turbine engine fan blade.
FIG. 2 shows a roller processing a workpiece such as a blade root shown in FIG. 1.
FIG. 3 is a perspective view of an embodiment of a deep rolling tool.
FIG. 4 is an exploded view of the deep rolling tool embodiment in FIG. 3.
FIG. 5 shows an embodiment of a deep rolling tool attached to a robot arm for accessing difficult to process areas of a workpiece with the deep rolling tool.
Fig. 6 is an isometric view of an exemplary fixture with a fan blade mounted.
Fig. 7 is a detailed view of the exemplary fixture with a fan blade mounted.
Fig. 8 is a side view of the exemplary fixture with fan blade mounted.
Fig. 9 is a side view of the exemplary fixture with fan blade mounted.
Fig. 10 is an isometric view of the exemplary fixture with fan blade mounted.
Fig. 11 is an isometric view of a detail in the exemplary fixture with fan blade mounted.
Fig. 12 is a side view of the exemplary fixture with fan blade mounted.
Fig. 13 is a side view of the exemplary fixture with fan blade mounted.
Fig. 14 is an isometric view of an exemplary roller tool and workpiece.
Fig. 15 is a multi-view isometric view of an exemplary roller tool and workpiece.
Fig. 16 is an isometric view of an exemplary roller tool and workpiece.
Fig. 17 is a side view of an exemplary roller tool and workpiece.
Fig. 18 is a side view of an exemplary roller tool and workpiece.
Fig. 19 is a side view of an exemplary roller tool.
Fig. 20 is an isometric view of an exemplary roller tool.
Fig. 21 is a side view of an exemplary roller tool arm.
Fig. 22 is a side view of an exemplary roller tool arm.
Fig. 23 is an x-ray side view of an exemplary roller tool arm with roller.
Fig. 24 is a perspective view of an exemplary arm and roller.
Fig. 25 is a side view of an exemplary roller tool.
Fig. 26 is a side cross-section view of an exemplary roller tool and roller.
Fig. 27 is a perspective view of an exemplary roller tool and roller.
Fig. 28 is a perspective view of an exemplary roller tool and roller.
Fig. 29 is a perspective view of an exemplary roller tool.
Fig. 30 is a perspective view of an exemplary roller tool and roller.
Fig. 31 is an end view of an exemplary roller tool.
Fig. 32 is a perspective view of an exemplary roller tool.
Fig. 33 is a detailed view of the exemplary roller tool of Fig. 32.
Fig. 34 is a cross-sectional view of an exemplary roller tool.
Fig. 35 is a cross-sectional detailed view of the exemplary roller tool of Fig. 34.
Fig. 36 is a cross-sectional view of an exemplary roller tool.
Fig. 37 is a perspective view of an exemplary multi-axis force measurement system.
Fig. 38 is a perspective view of an exemplary roller tool.
Fig. 39 is a detailed view of an exemplary roller tool.
Fig. 40 is a detailed view of an exemplary roller tool.
Fig. 41 is a cross-sectional detailed view of an exemplary roller tool.

Generally, a roller disk with a crowned or otherwise nonplanar working surface about its perimeter can be attached to an end of a shaft. The tool can be attached to a device to process one or more parts. The tool uses multiple tools passes to induce residual compressive stresses while maintaining the appropriate level or range of contact stresses at the roller's point of contact via selective spring loading of the tool. A fixture is utilized to secure the part for use of the tool to perform the deep rolling.

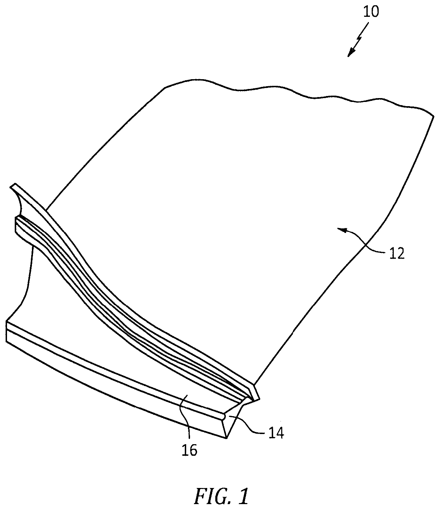

FIG. 1 shows workpiece 10, which can be supported in a suitable fixture (not shown). Workpiece 10 has airfoil 12 and dovetail root 14. At least one nonplanar surface is to be processed (e.g., junction 16 between airfoil 12 and root 14) to have residual compressive stresses near the surface in and around junction 16.

In this example, workpiece 10 is an aluminum alloy hollow fan blade for a turbofan engine, but the process can be adapted to nearly any workpiece having a nonplanar surface into which residual compression stresses are desired to be incorporated.

Thus, in the example of a dovetail-rooted blade, it is desired to increase residual compressive stresses around both sides of junction 16 between dovetail root 14 and airfoil 12. As most of the bending stresses are concentrated around junction 16, this location is most prone to fatigue damage. The combined effects of fatigue and corrosion pitting can be reduced via deep rolling because the residual compressive stress induced by application of the rolling tool (shown in subsequent figures) reduces the pathways for damage to propagate through the part, extending the time before failure or replacement.

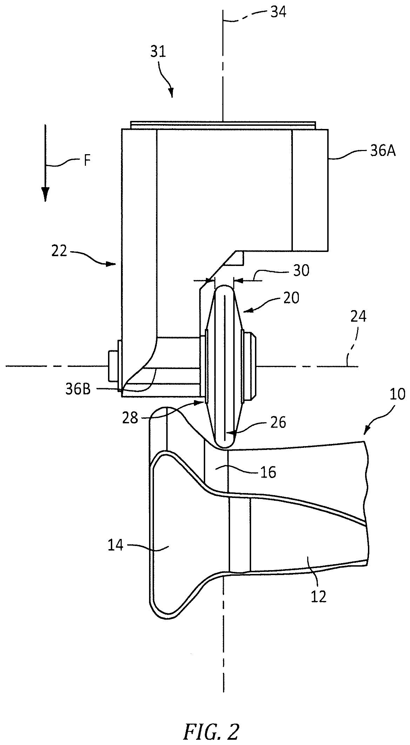

FIG. 2 shows roller disk 20 processing junction 16 of workpiece/blade 10 between airfoil 12 and root 14. Disk 20 can be joined to a portion of hub 22 with roller disk 20 rotatable about an axis 24 angled relative to a downward force direction F. Here, axis 24 is normal to downward force direction F and thus, resulting downward contact force is applied to junction 16 generally in direction F as well.

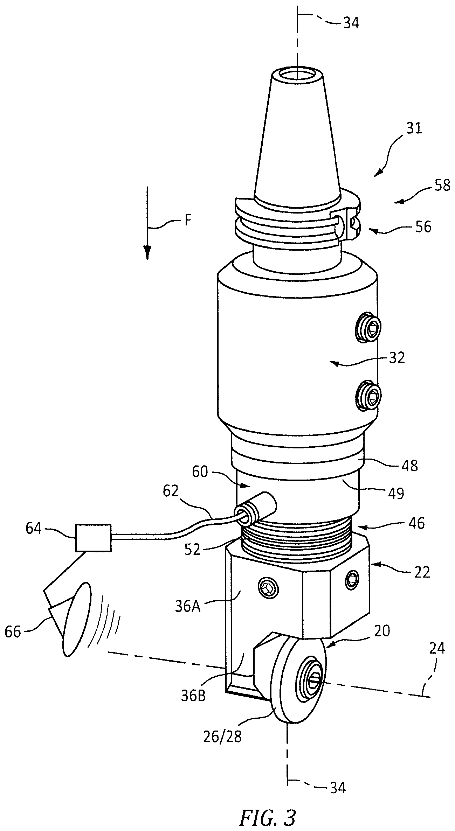

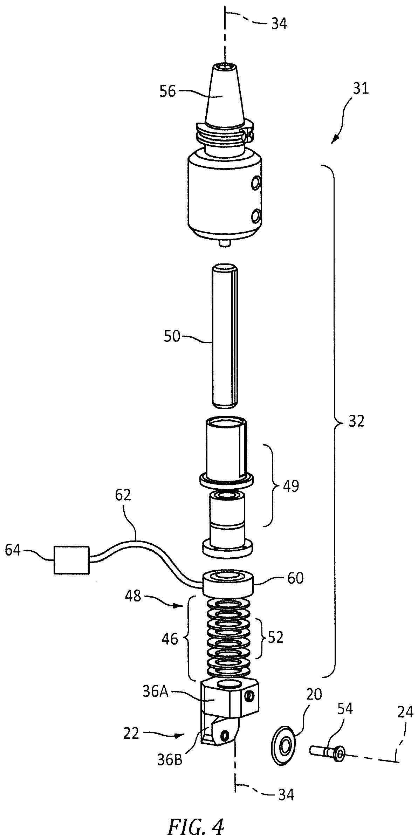

Disk 20 has working surface 26 about its perimeter 28 and can include a profile along its width 30 (best seen in FIGS. 3 and 4), such that an effective radius of the roller disk varies along a width thereof. It can be seen in FIG. 2 that the disk should be of a radius that provides clearance over protruding regions of the workpiece (e.g., dovetail root 14). In a conventional arrangement for processing a modern aluminum fan blade dovetail, this requires a minimum disk radius of about 2 inches (51 cm), but the size will vary depending on a particular application.

Hub 22 connects disk 20 to a shaft through which the downward force can be applied in direction F. One example embodiment of a deep rolling tool incorporating this construction is shown in FIG. 3. Tool assembly 31 includes spring-loaded shaft assembly 32 disposed along axis 34, which is parallel to downward force direction F. Hub 22 can have a first/upper portion 36A along axis 34 and a second/lower portion 36B at a nonzero angle relative to axis 34. This angle is therefore consistent with the nonzero angle between axis 24 and direction F.

Operation of tool assembly 31 can be as follows. The rolling operation can include applying a force in direction F along axis 34 such that the applied force is transferred through spring-loaded shaft assembly 32, hub 22, and roller disk 20 to a first nonplanar surface of the workpiece (e.g., junction 16). The resulting force applied to the first nonplanar surface varies along the width of working surface 26 of the disk due to the variable profile across width 30 (seen in FIG. 2).

At least one rolling operation can be performed on a nonplanar surface using a tool like that shown in FIG. 3. FIG. 3 depicts roller disk 20 joined to second/lower portion 36B of hub 22, and which is rotatable about axis 24 through second/lower portion 36B of hub 22. Roller disk 20 can be supported on one or more bearings (best seen in the exploded view of FIG. 4). As noted with respect to FIG. 2, disk 20 can have working surface 26 about perimeter 28 and can include a variable or crowned profile. As a result, an effective radius (and thus applied bearing stresses) of roller disk 20 varies along working surface 26. Though shown as a crowned roller with a single center peak, working surface 26 can additionally have one or more peaks, troughs, etc. The resulting profile can thus either be curved, slanted, or flat.

Spring-loaded shaft assembly 32 can take several different forms. In one non-limiting example, resilient element 46 is disposed at distal end 48 of shaft assembly 32, while a rigid shaft 50 (best seen in FIG. 4) can be supported on a device to restrain its movement only along first axis 34. This can include one or more linear bearings 49. In other embodiments, shaft assembly 32 can include a flexible beam without a separate resilient element.

Regarding resilient element 46, certain non-limiting embodiments include a plurality of stacked Belleville washers 52 which can be selected in number and properties in order to provide a desired level of resilience. Alternatively, resilient element 46 can include a diaphragm spring or the like.

Certain embodiments of tool assembly 31 can also optionally include other elements. For one, tool assembly 31 can include tool holder 56 mounted to proximal end 58 of rigid shaft 50 and/or shaft assembly 32. Tool holder 56 can be a standard or custom adapter or other device to facilitate attachment of tool assembly 31 to commercially available multi-axis computerized numerical control (CNC) machines (not shown). Tool holder 56 can additionally or alternatively facilitate attachment to other devices capable of steering tool assembly 31 while simultaneously applying sufficient (but not excessive) force in downward direction F to induce the desired compressive stresses.

In certain embodiments, tool assembly 31 can include load cell 60 to measure the force at the contact surface (see FIG. 4). Load cell 60 can optionally be disposed along axis 34 adjacent to resilient element 46 and can include a wired and/or wireless connection 62 for controller 64. This will be explained in more detail below.

FIG. 4 shows an exploded view of tool assembly 31 from FIG. 3. In addition to the elements described generally above, tool assembly 31 can include the following details. As noted, shaft assembly 32 is restricted to movement only along first axis 34. Thus, in this example embodiment, shaft assembly 32 can include linear bearing 48 arranged along axis 34 for supporting solid shaft 50. This simplifies determination of the downward force that needs to be applied in direction F, as any deflection away from that axis causes a reduction in the actual downward force vectors, while also applying unwanted transverse forces on the tool working surface.

In the example shown, hub 22 includes first and second portions 36A, 36B which form a right, or other, angle therebetween. Roller disk 20 is supported on a bearing or other device so that it is rotatable about axis 24. Here, with the right angle, axis 24 is perpendicular to first axis 34. In this example, working surface 26 of roller disk 20 is symmetrically crowned from a center to opposing first and second edges. Alternatively, working surface varies according to a desired load profile along the tool path and can include peaks, troughs, curves, etc.

Shaft assembly 32 can be calibrated before or between uses to provide a desired force concentration at working surface 26 of roller disk 20. In the example shown, at least one of solid shaft 50 and resilient element 46 can be calibrated so that the force applied to the tool in direction F (shown in FIGS. 2 and 3) and transmitted through roller disk 20 is sufficient to impart a residual compression stress in the workpiece at the first nonplanar surface (e.g.; junction 16 in FIGS. 1 and 2).

The deep rolling tool described heretofore can be used in a number of different applications, depending on the required accuracy and precision of the applied forces needed. Success in some cases can be achieved by merely controlling the tool load within previously determined upper and lower bounds, such as through spring loading the tool and applying a target amount of compression to the spring. The compliance obtained by using a spring-loaded tool enables an acceptable level of load control during processing but there is no record of what the actual contact stress was over the surface. However, this is the cheapest and often simplest option, where any suitable mechanical device with an ability to provide a controlled downward force can be used.

Some parts, however, require that the actual residual stresses at the working surface be verified. There are currently no non-destructive evaluation techniques that can be used to verify the correct level of residual stress was achieved during processing. Thus, a load cell or another feedback mechanism can be incorporated into the tool that allows monitoring and/or real-time adjustment of the force applied through the roller to the workpiece. The tool can process a part using multiple tool passes while maintaining the appropriate level of contact stress at the roller's point of contact. In some cases, the feedback is logged for quality control, so that it can be determined whether any irregularities occurred in the process. The load profile across the surface of the workpiece 10 can be varied. For example, the load applied to the workpiece 10 surface can be a lower value initially proximate the edges of the workpiece 10 and then be a higher value across the workpiece 10 and then include a lower value as the roller nears the opposite edge of the workpiece 10 just prior to finishing the pass. The load can be applied in a consistent fashion across the surface of the workpiece 10 that is being DR treated. The load profile can be customized across the surface of the workpiece 10 by use of the position and force sensors, such as, load cell 60 and controller 64.

As was shown and described above, load cell 60 can optionally be incorporated into tool assembly 32. Load cell 60, in certain embodiments, is contiguous to resilient element 46 (e.g., plurality of Belleville washers 52), and enables real time monitoring of the applied load during processing. A deep rolling tool with an integral load cell thus enables verification of a key process parameter, roller load, which is critical for quality control in many production environments.

Process consistency could be further enhanced by using the load cell for closed loop load control which improve the precision with which the load could be maintained. Such a system would be much more tolerant of dimensional variability in the components being processed. It will also ensure that there are no micro-cracks on surface due to inadvertent localized application of intensive pressure.

Load cell 60 can be in wired or wireless communication with a controller 64 and/or monitor adapted to receive wired or wireless signals corresponding to an instantaneous load on resilient element 46. Controller/monitor 64 can include closed-loop feedback logic, by which it can be adapted to vary a force applied in direction F (see also FIGS. 2 and 3) on tool assembly 31, along axis 34. Operating load cell 60 can generate signals corresponding to an instantaneous load on resilient element 46. The magnitude of the force can be based at least in part on one or more of the signals received from and generated by load cell 60. The applied force is varied based on a plurality of signals from load cell 60 to impart a substantially equal residual compression stress in the workpiece along a tool rolling path on the first nonplanar surface. In an exemplary embodiment, a high-speed camera 66 can be utilized as a vision sensor to check any anomalies and integrate decision making algorithms in the robot controller 64 for direct adjustment of DR parameters or DR path for correcting the system.

The nature of many tools for CNC machines requires that they be axisymmetric (generally to facilitate rotation of the tool working end). Thus, CNC programming and many common subroutines are generally tailored to this expectation. In contrast, the non-axisymmetric nature of tool assembly 31 can require that the CNC machine be provided with more complex programming even for some relatively simple tool paths. Depending on the desired tool paths and number of passes, programming and use of a CNC machine may be unnecessary or prohibitively complex, in which case, tool assembly 31 can be mounted to a different machine to apply the desired force over the contact path. While certain processes can generally be performed using a specialized tool in a conventional CNC milling machine, the deep rolling tool can be inconsistent with generic subroutines and tool paths used to manipulate conventional axisymmetric tools. Therefore, use of the deep rolling tool, which is not axisymmetric, has additional path programming constraints. While planar surfaces can be processed by the deep rolling tool using a 3-axis CNC machine, more complex geometry components will require at least a 5-axis machine and in some instances a 6-axis machine may be necessary. Maintaining the normality and orientation constraints for deep rolling of complex component geometries can be challenging as the tool path programming software won't automatically satisfy these required constraints. While creative programming can generally overcome these issues it may require an experienced and highly skilled programmer.

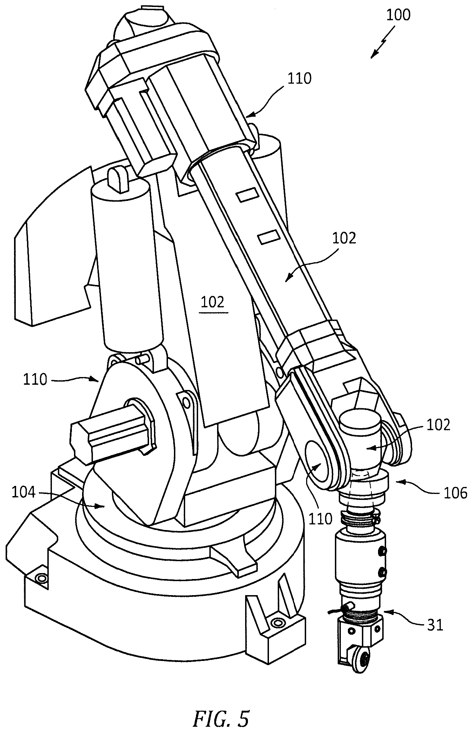

To overcome this, deep rolling tool assembly 31 can be attached to the end of a robotic arm 100 as shown in FIG. 5. Robotic assembly 100 can include, for example, a plurality of linear arms 102 connected in series between base end 104 and working end 106. Adjacent ones of arms 102 can be connected via a corresponding plurality of multi-axis joints 110 such that working end 106 is articulated by movement of one or more of arms 102 relative to one or more of multi-axis joints 110.

Operation of a robotic assembly such as assembly 100 in FIG. 5 can include using it to apply a downward force over a rolling path of non-axisymmetric deep rolling tool assembly 31. The downward force is applied to a proximal end of a spring-loaded tool shaft (best seen in FIG. 2) aligned with a first axis, such that the downward force is transferred through the shaft to a hub disposed at a distal end of the shaft assembly (also best seen in FIG. 2). In certain embodiments, robotic assembly 100 is sufficiently programmed and/or controlled to provide the appropriate instantaneous feedback of downward force, and the resilient element in tool 31 can be modified or omitted as needed.

As described above, the transferred downward force is transmitted from an upper portion of the hub aligned with the first axis to a lower portion of the hub parallel to a second axis. The second axis forms a nonzero angle relative to the first axis, about which a roller disk is supported by one or more bearings. A resulting compressive force is applied to the first nonplanar surface of the workpiece via a working surface of the roller disk.

A robot arm has more degrees of freedom than a 5-axis milling machine which facilitates processing of complex geometry parts. Current commercially available robot arms have been developed to the point where they can withstand the combination of high loads and precision required in deep rolling applications. The software for controlling robot arms is different to that for CNC milling machines and is more suited to maintaining the required orientation constraints of a multi-axis deep rolling tool. Also, it is easier to accommodate processing of large components using a robot arm, as the part does not have to fit inside the machine as it does with a milling machine.

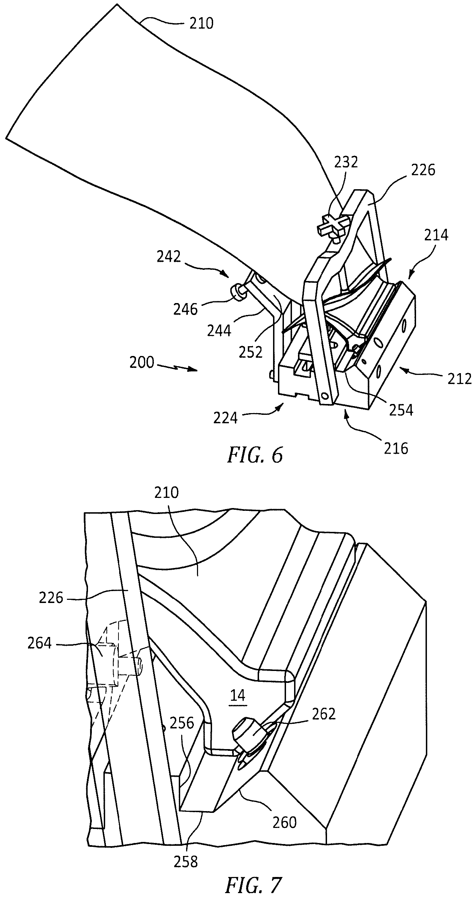

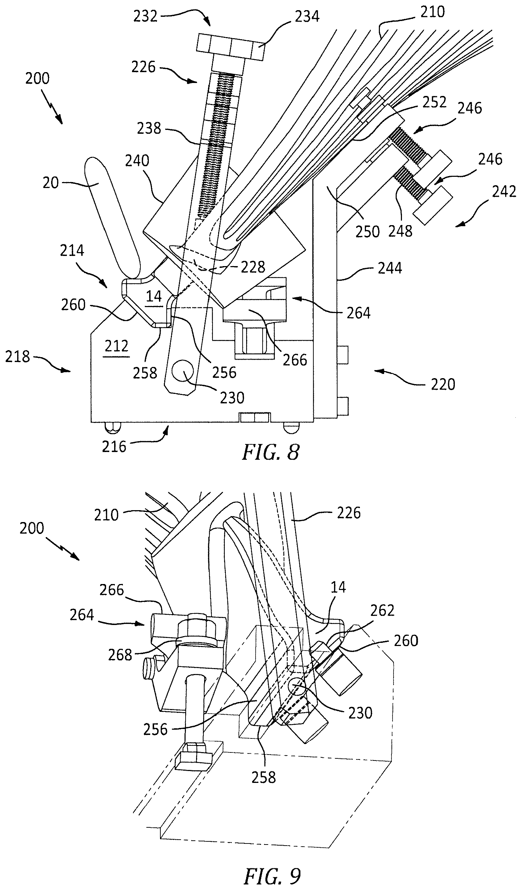

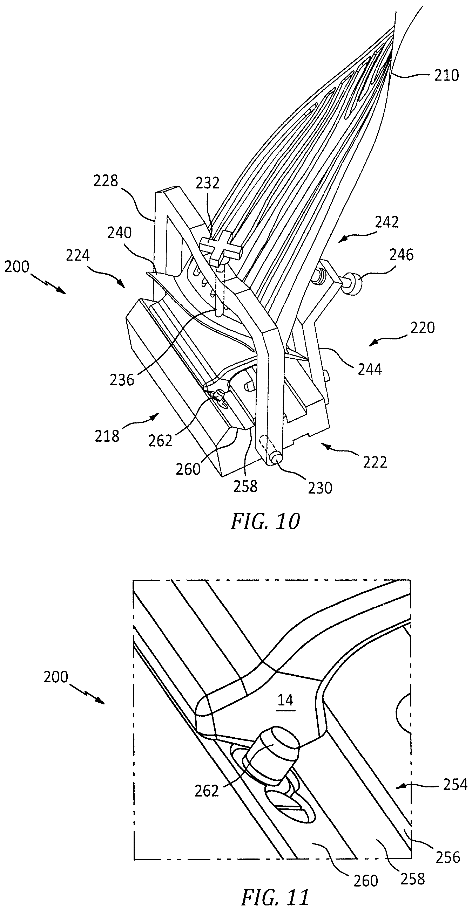

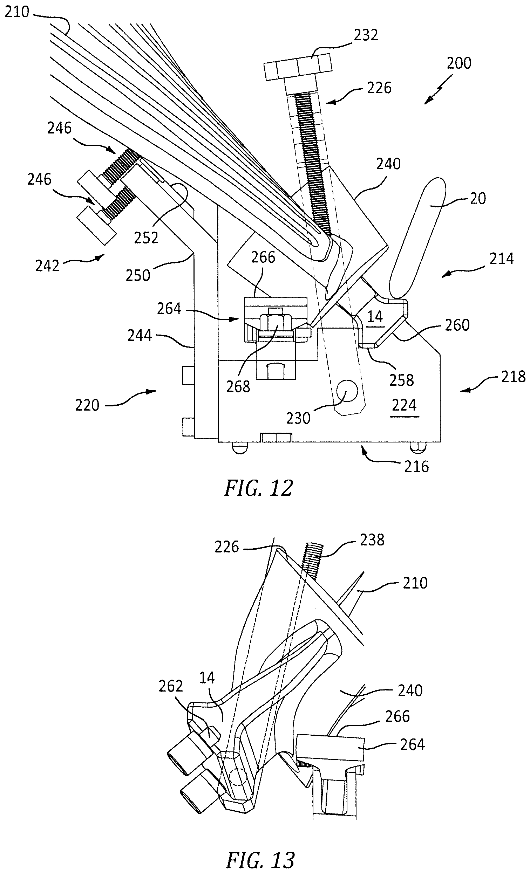

Referring also to Fig. 6 through Fig. 13 a fixture 200 is shown with the workpiece, such as a hollow fan blade or simply fan blade 210 mounted. The fixture 200 includes a body 212. The body 212 includes an upper region 214 opposite a lower region 216. The body 212 includes a front 218 and a rear 220 opposite the front 218. The body 212 includes a right side 222 and a left side 224 opposite the right side 222.

The fixture 200 includes a pivot clamp 226 attached to the body 212. The pivot clamp 226 includes an arm 228 that attaches to the body 212 about a pivot 230. In an exemplary embodiment the arm 228 can be a C-shape design that can attach to the right side 222 and the left side 224 at pivot 230 on each side as shown.

The pivot clamp 226 includes an adjustable clamp 232. The adjustable clamp 232 can be threaded and adjustably mounted through the arm 228. In an exemplary embodiment, other mechanical techniques can be employed to adjust the adjustable clamp 232, such as latches, levers, set screws and the like. The adjustable clamp 232 can translate linearly relative to the arm 228 by use of rotary motion via the threaded connection with the arm 228. The adjustable clamp 232 includes a hand knob 234 and a surface contactor 236 opposite the hand knob 234 along a shaft 238 of the adjustable clamp 232. The hand knob 234 can be manipulated to rotate the shaft 238. The adjustment of the adjustable clamp 232 can move the surface contactor 236 relative to the fan blade 210 to secure the fan blade 210 to the fixture 200.

The surface contactor 236 is configured to press against a portion of the fan blade 210 to secure the fan blade 210. In an exemplary embodiment the surface contactor 236 can press against the fan blade 210 proximate a platform 240 of the fan blade 210. The pivot clamp 226 can be moved relative to the pivot 230 such that the pivot clamp 226 can swing to allow for access to the upper region 214 of the fixture 200. The fan blade 210 can be installed or manipulated, such as being rotated for further processing. The pivot clamp 226 can be released allowing for the fan blade 210 to be moved and then secured to hold the fan blade 210 in place.

The fixture 200 includes a support 242 for maintaining the fan blade 210 secured. The support 242 can include at least one brace 244 coupled to the rear 220 of the body 212. The support 242 can extend upward relative to the upper region 214 to engage the airfoil 12 portion of the fan blade 210. In the exemplary embodiment shown, there are a pair of braces 242 that each include an adjustable strut 246. The brace 244 can be interchangeable with an alternative brace 244 with differing dimensions or shapes adapted for use with different fan blade 210 designs. In an exemplary embodiment the adjustable strut 246 can include a threaded shaft 248 that engages the brace 244 to translate by use of rotary motion and the threads formed in the strut 246 and brace 244. It is contemplated that other mechanisms can be employed to translate the shaft 248 relative to the strut 246, such as latches, levers, set screws, ratchet, detent ball and cavity, telescopic friction fittings and the like. The support 242 is shown with the struts 246 having a bend 250 that allows for a face 252 of the strut 246 to be approximately parallel to the airfoil 12, to enable the shaft 248 to be approximately perpendicular to the airfoil 12. The adjustable strut 246 allows for more precise adjustment and support of the fan blade 210. The support 242 helps to prevent unwanted deflection of the fan blade 210, especially along a length of the airfoil 12.

The fixture 200 includes a receiver 254 located in the upper region 214. The receiver 254 is configured to accept the root 14 of the fan blade 210. The receiver 254 includes a first landing 256, a second landing 258 and a third landing 260. Each of the landings 256, 258 and 260 can be configured to match a portion of the root 14 to provide adequate surface to support the root 14 of the fan blade 210 while the deep rolling process is conducted on the exposed portion of the root 14 opposite the receiver 254. The landings 256, 258, 260 can be configured as planar surfaces. In exemplary an embodiment landing 256, 258, 260 can include a convex or concave surface structure designed to match the corresponding exterior surface of the root 14. The receiver 254 allows for the fan blade 210 to be removed and rotated so that the untreated surfaces of the root 14 can be processed by DR. The landings 256, 258, 260 can extend across the width of the upper region 214 from the right side 222 to the left side 224. The receiver 254 includes a lug 262 that extends outward to brace the root 14. The lug 262 can extend from the third landing 260. The lug 262 can be adjustable, able to be moved to accommodate various sizes/positions of root 14. The lug 262 is configured to secure the fan blade 210 in the receiver 254. The lug 262 can include mechanisms to adjust and move including a threaded shaft, latches, friction fitting, and the like.

The fixture 200 can include a shoulder 264 attached to the upper region 214. The shoulder 264 is configured to support the platform 240 portion of the fan blade 210. The shoulder 264 can be located in the upper region 214 between the receiver 254 and the support 242. The shoulder 264 can include a jaw structure 266 that is contoured to match the perimeter shape of the platform 240 of the fan blade 210. The shoulder 264 can provide support of the fan blade 210 against the forces applied by the pivot clamp 226, such that the fan blade 210 is secured between the pivot clamp 226 on one side and the shoulder 264 and the receiver 254 and the brace 244 on the opposite side of the fan blade 210. The shoulder 264 can be adjusted by use of fasteners 268 secured to the body 212. In an exemplary embodiment, the fasteners 268 can include mechanisms to adjust and move including a threaded shaft and nuts, latches, friction fitting, and the like.

The fixture 200 is configured to mount and secure the fan blade 210 in a position that allows access of the working surface 26 to the fan blade 210 in the absence of unwanted contact to the fan blade 210. The fixture 200 is configured to easily dismount the fan blade 210 and allow for the manipulation of the fan blade 210 to rotate the fan blade 210 and access surfaces for the DR process.

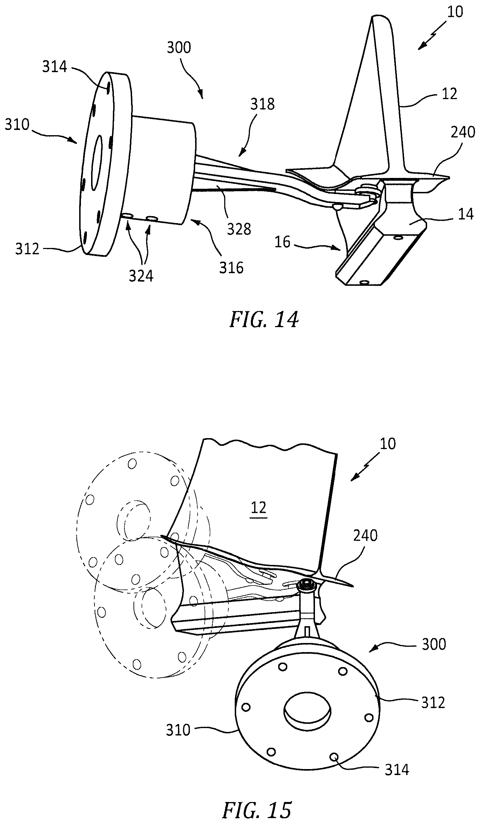

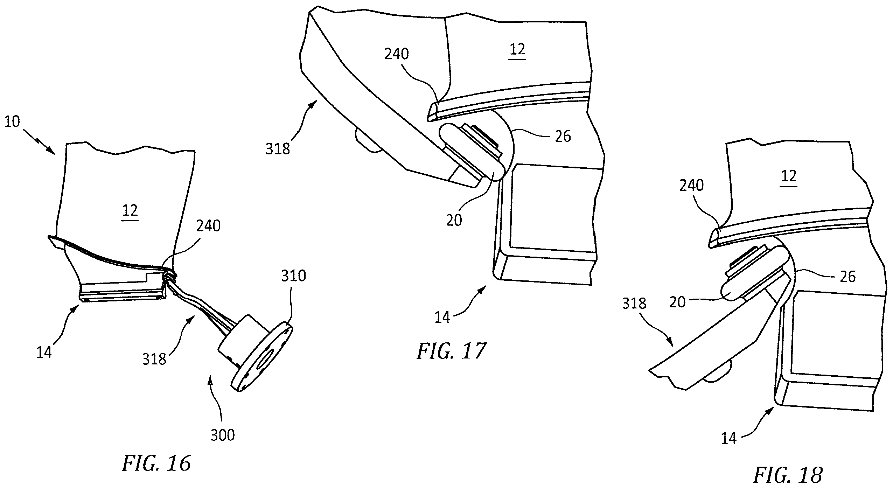

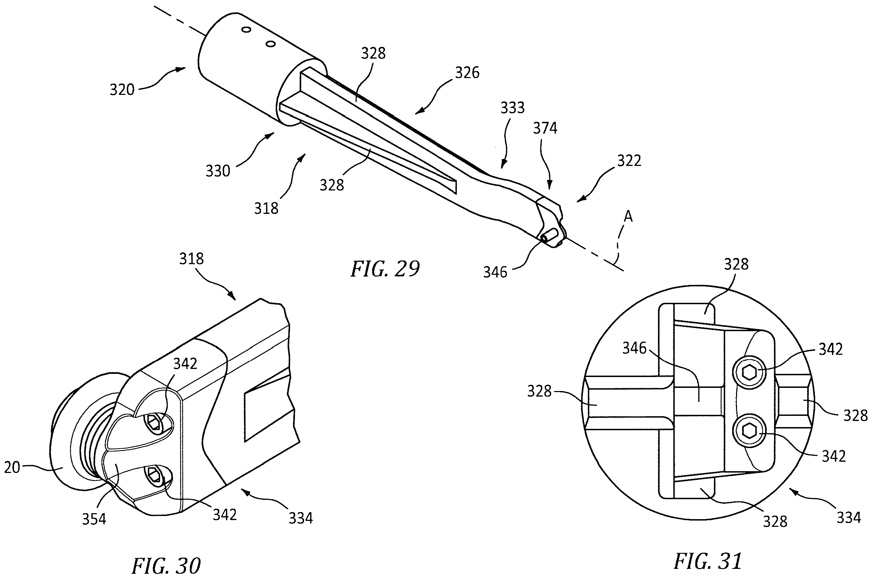

Referring also to Fig. 14 through Fig. 29, the exemplary roller tool 300 can be seen. The roller tool 300 can be an alternative to the tool assembly 31 described above. The roller tool 300 can include an adapter plate 310. The adapter plate 310 is configured to be attached to the working end 106 of the robotic assembly 100. The working end 106 of the robotic assembly 100 can include the load cell 60 otherwise known as a dynamic force controller in operative communication with the adaptor plate 310. The dynamic force controller is configured to monitor the applied forces continuously during the deep rolling process. The adapter plate 310 has a flange section 312 with bolt holes 314 adapted to receive fasteners (not shown). The adapter plate 310 includes a receiver 316. The receiver 316 is adapted to receive an arm 318. The arm 318 includes an adapter end 320 and a roller end 322 opposite the adapter end 330. The adapter end 320 can be configured to couple with the receiver 316 to secure the arm 318 to the adapter plate 310. In an exemplary embodiment, the adapter end 320 is configured as a cylinder (as seen in Fig. 29) that fits into the cylinder shape of the receiver 316. Threaded fasteners 324 can be employed to secure the adapter end 320 to the receiver 316 of the adapter plate 310.

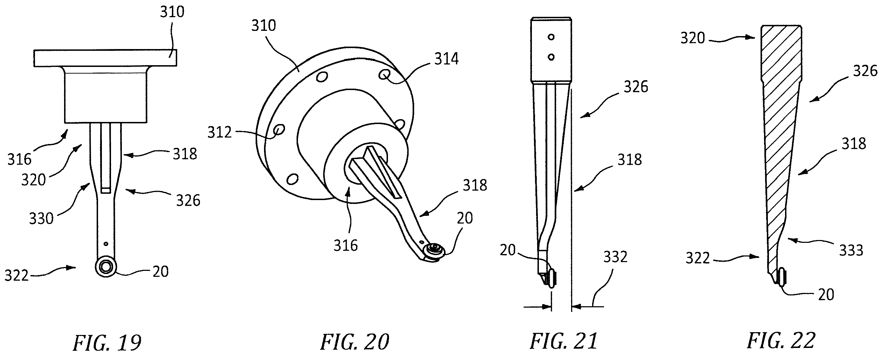

The arm 318 includes a midspan portion 326 located between the adapter end 320 and the roller end 322. The midspan portion 326 can include a stiffener 328 formed in the arm 318 that extends along the arm 318 between the adapter end 320 and the roller end 322. The stiffener 328 can extend radially from the arm 318 relative to an axis A (Fig. 29). The stiffener 328 can be formed as a longitudinal tee flange 330 and the like. The stiffener 328 can taper from the adapter end 320 to the roller end 322, decreasing in radial width along the length of the arm 318. There can be multiple stiffeners 328 that allows for the removal of excess material from the arm 318 while maintaining the structural integrity of the roller tool 300. The stiffeners 328 also allow for the arm 318 to include an offset feature 332 (Fig. 21), that enables the roller disc 20 to contact with the workpiece 10 at the working surface 26 and avoid unwanted contact of the arm 318 with the platform 240 or other portion of the workpiece 10.

The offset feature 332 allows for the avoidance of unwanted contact of the arm 318 with the workpiece 10 while maintaining the necessary roller disk 20 forces for conditioning the working surface 26. The arm 318 can include a curved feature 333 that enhances the avoidance of contact with the workpiece 10.

The arm 318 includes a roller disk support 334. The roller disk support 334 is attached to the arm 318 proximate the roller end 322. The roller disk support 334 includes a connector portion 336 that mates with the arm 318 roller end 322. The connector portion 336 can have a positioner mechanical interlock feature 337. The positioner mechanical interlock feature 337 can be dovetailed or shaped with a concave surface 338 that mates with a convex surface 340 of the arm 318. The concave surface 338 and convex surface 340 match and provide support in multiple directions to ensure the roller disk support 334 is anchored to the arm 318.

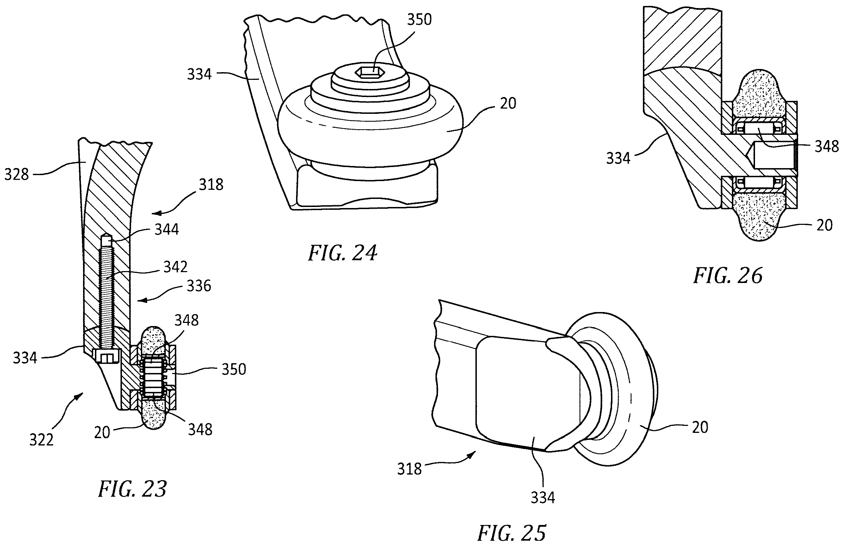

A pair of roller disk support 334 fasteners 342 are threaded to a pair of bores 344 (see Fig. 23). The fasteners 342 allow for multiple types of interchangeable roller disk supports 334 to be connected to the arm 318 responsive to the type of workpiece 10 being rolled.

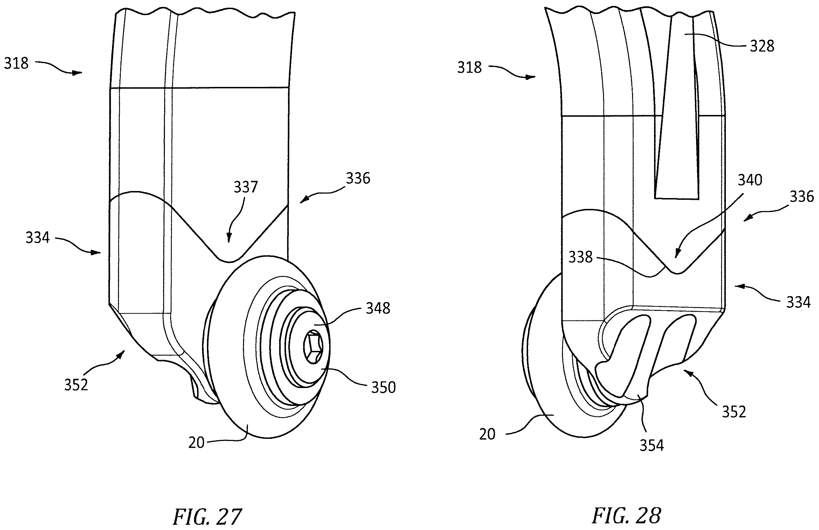

The roller disk support 334 includes an axel 346 (see Fig. 31). The axel 346 can be formed integral with the roller disk support 334. The roller disk 20 can include bearings 348 that support the roller disk 20 on the axel 346. An axel fastener 350 can be secured to the axel 346 to support the roller disk 20. The roller disk support 334 can include a tapered portion 352 (Fig. 28). The tapered portion 352 allows for a narrow profile and reduces the incidence of contact with workpiece 10. The roller disk support 334 includes a rib 354 configured to provide structural support and access for the fasteners 342 to insert into the bores 344. The rib 354 can allow for the tapered portion 352 to have a smaller profile, while maintaining the structure necessary to support the axel 346.

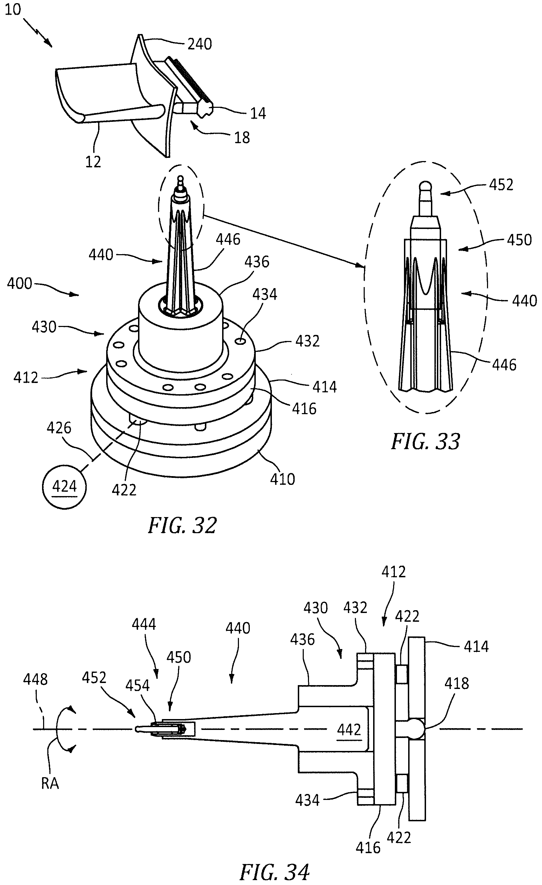

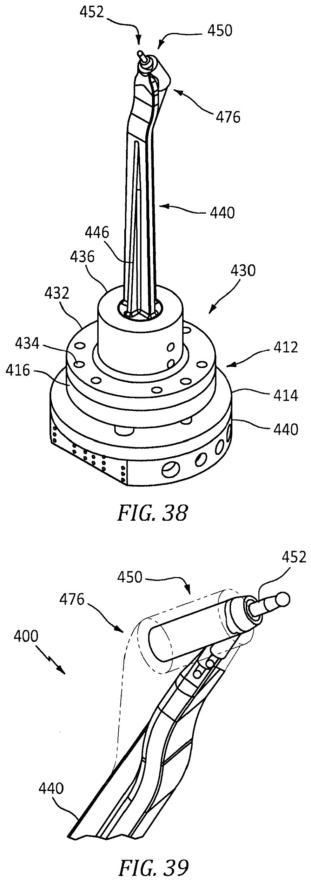

Referring also to Fig. 32 through Fig. 41, including views of an exemplary embodiment of a roller tool 400. The roller tool 400 can be an alternative to the tool assembly 31 described above. The roller tool 400 can include an adapter plate 410. The adapter plate 410 is configured to be attached to the working end 106 of the robotic assembly 100 (robot arm, CNC machine and the like).

The roller tool 400 can include a multi-axis measurement unit 412. The multi-axis measurement unit 412 can include a base plate 414. The base plate 414 can be attached to the adaptor plate 410. The multi-axis measurement unit 412 can include a pivot plate 416 operatively coupled to the base plate 414. The pivot plate 416 couples to the base plate 414 with a central sliding pivot 418. The central sliding pivot 418 prevents shearing action between the pivot plate 416 and the base plate 414. The central sliding pivot 418 can be mounted within a pivot point joint 420 formed in the base plate 414. The pivot point joint 420 can be located centrally within the base plate 414, such that the pivot plate 416 can move relatively to the base plate 414. The pivot plate 416 mounted on the central sliding pivot 418 mounted within the pivot point joint 420 can tilt and roll relative to the base plate 414.

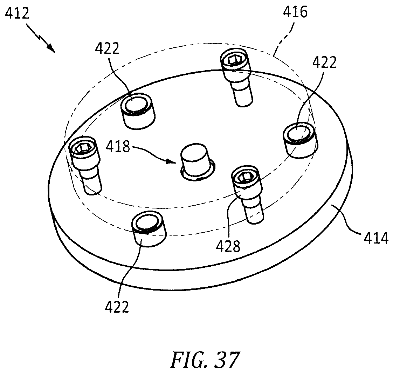

The multi-axis measurement unit 412 can include a load cell(s) 422 (see also Fig. 37). The load cell(s) 422 can be mounted between the base plate 414 and the pivot plate 416. There can be multiple load cells 422 arrayed spaced apart between the base plate 414 and pivot plate 416. The load cells 422 can be arrayed in a circular pattern to match the circular form of the pivot plate 416. The load cell(s) 422 can be in operative communication with a dynamic force controller 424. The load cell 422 can sense the relative motion of the pivot plate 414 to the base plate 416. Tension bolts 428 can be employed to connect the pivot plate 416 and base plate 414. The tension bolts 428 can preload the load cells 422 to calibrate the multi-axis measurement unit 412 to no load conditions.

The load cell(s) 422 can be configured to sense the movement of the pivot plate 416 relative to the base plate 414 as the pivot plate 416 tilts relative to the base plate 414. For example, a side load placed on the roller tool 400 can translate to a combination of load cell signals 426 that can indicate the direction and magnitude of the force being applied. The dynamic force controller 424 is configured to monitor the applied forces continuously during the deep rolling process. The load cell signal 426 can be fed back to the dynamic force controller 424 to ensure that the proper load is being placed on the target area point of contact 18.

The roller tool 400 includes an arm mount 430. The arm mount 430 includes a flange section 432 with bolt holes 434 adapted to receive fasteners (not shown). The arm mount 430 attaches to the pivot plate 416 via the flange section 432. The arm mount 430 includes an arm receiver 436. The arm receiver 436 extends from the flange section 432. The arm receiver 436 is adapted to receive an arm 440.

The arm 440 includes an adapter end 442 and a roller end 444 opposite the adapter end 442. The adapter end 442 can be configured to couple with the arm receiver 436 to ultimately secure the arm 440 to the adaptor plate 410. In an exemplary embodiment, the adapter end 442 is configured as a cylinder (as seen in Fig. 34) that fits into the cylinder shape of the arm receiver 436.

The arm 440 includes stiffeners 446 configured to reduce deflection from an arm axis 448. The arm axis 448 extends through the arm 440 and can align with the central sliding pivot 418 and pivot point joint 420 during certain orientation of the roller tool 400.

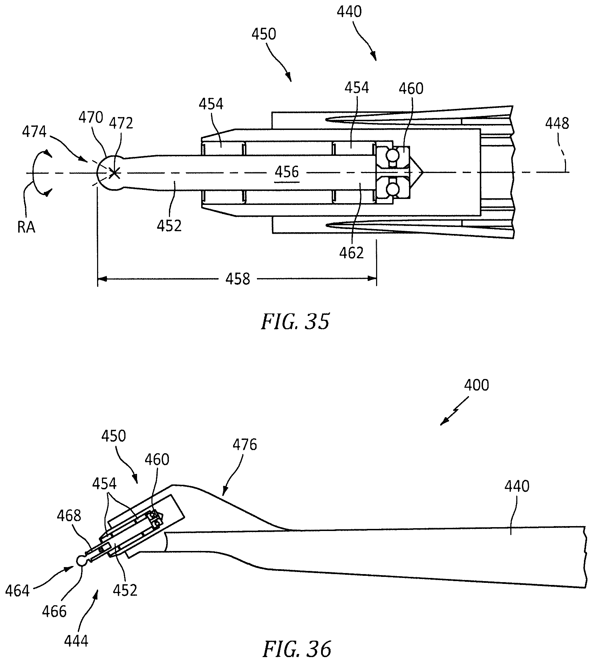

The arm 440 includes a cartridge assembly 450. The cartridge assembly 450 can be located proximate the roller end 444. The cartridge assembly 450 is configured to receive a rolling element 452. The cartridge assembly 450 includes radial bearing(s) 454 that support a shaft 456 of the rolling element 452. In the embodiments shown in Fig. 34, Fig. 35, Fig 36 and Fig. 41, there are two radial bearings 454 that support the shaft 456 along a length 458 of the shaft 456. A thrust bearing 460 can be included with the cartridge assembly 450 for supporting the shaft 456 of the rolling element 452. The thrust bearing 460 can support a base end 462 of the shaft 456 opposite a ball end 464. The thrust bearing 460 can allow for rotation of the shaft 456 about the axis 448 as shown in Fig, 34 and Fig. 35 by rotary arrow RA and accommodate axial bearing loads as the rolling element 452 is pressed against the point of contact 18. The shaft 456 rotates within the bearings 454, 460 around axis 448.

The rolling element 452 can be a monolithic rod configuration with the shaft 456 being a solid cylinder shaped bar from the base end 462 to the ball end 464 as shown in Fig. 35.

As seen in Fig. 36, the rolling element 452 can be a two-part configuration with a detachable interchangeable tooling ball 466 inserted into a tooling ball receiver 468 formed in the shaft 456 proximate the ball end 464. The tooling ball receiver 468 can accept various interchangeable tooling balls 466 for customizing the roller tool 440. The interchangeable tooling ball 466 can snap-fit into the tooling ball receiver 468 and remain seated within the tooling ball receiver 468 for use and be removed to be replaced with another style as needed.

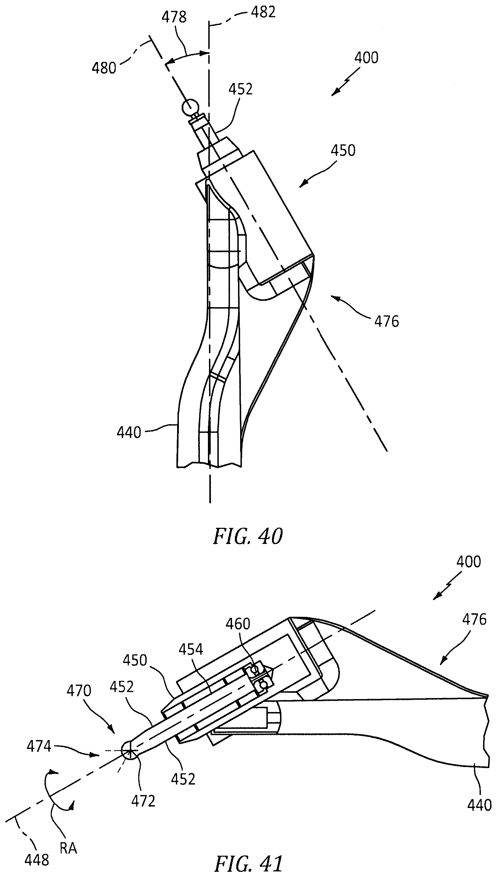

The rolling element 452 includes a ball tip 470 configured to contact the target area point of contact 18 on the workpiece 10 for deep rolling. The ball tip 470 has a spherical shape with a center point 472 located within the center of the sphere as shown at Fig. 35 and Fig. 41. The ball tip 470 can be various sizes depending on the materials and stress relief strategy. The ball tip 470 of the rolling element 454 has a skid zone or dead zone 474. The skid zone 474 is a location along the exterior of the rolling element 454 ball tip 470 that when contacted with the target area point of contact 18 of the workpiece 10 will not produce a rolling motion, the shaft 456 will not rotate about axis 448 supported by the bearings 454, 460. The skid zone 474 contact can result in the ball tip 470 merely skidding along the point of contact 18 instead of rolling along the point of contact 18 as intended. Thus, contacting the workpiece 10 within the skid zone 474 can result in unwanted surface marking. The skid zone 474 can be dependent upon the geometry of the ball tip 470 and the angle that the roller tool 440 approaches and contacts the workpiece 10. In an exemplary embodiment the skid zone 470 can be defined as a cone shape with an angle of about 5 degrees starting at the center point 472 angling out from the axis 448. The skid zone 474 can have a size that is related to the size of the ball tip 470. For example, a larger ball tip 470 will have a smaller skid zone 474.

As seen in Fig. 36, and Fig. 38 through Fig. 41 the roller tool 400 includes a detachable cartridge holder 476. The detachable cartridge holder 476 can be fastened to the arm 440 proximate the roller end 444. The detachable cartridge holder 476 can be removed and replaced with different styles of detachable cartridge holder 476. The detachable cartridge holder 476 can include a rolling angle 478 as seen in Fig. 40. The rolling angle 478 is formed between a rolling element axis 480 and an arm axis 482. The rolling angle 478 can be tailored to avoid bending moment on the arm 440. The detachable cartridge holder 476 allows for deep rolling the target area 18 with higher tilt angles adding freedom of access greater than that utilizing large rollers.

Standardized modeling can be conducted to analyze and optimize the forces necessary for deep rolling the workpiece and subsequently design the roller disk and roller tool.

A technical advantage of the disclosed system can include a cartridge assembly with a rolling element that can apply constant normal load to the surfaces being treated while avoiding unwanted contact with the workpiece.

Another technical advantage of the disclosed system can include the roller tool being designed and checked for any collision with the hollow fan blade surfaces.

Another technical advantage of the disclosed system can include the capacity for a high system repeatability of the surface finish produced that is within design specifications.

Another technical advantage of the disclosed system can include an interchangeable cartridge holder and tooling ball, allowing for matching the workpiece and the roller disk.

There has been provided a system for deep rolling. While the system for deep rolling has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A multi-axis deep rolling tool for deep rolling a workpiece comprising:
a roller tool comprising an adaptor plate;
a multi-axis measurement unit attached to the adaptor plate;
an arm mount attached to the multi-axis measurement unit;
an arm attached to the arm mount, the arm comprising an adapter end proximate the arm mount, the arm comprising a roller end opposite the adapter end;
a cartridge assembly attached to the arm proximate the roller end, the cartridge assembly including a rolling element insertable within the cartridge assembly, the rolling element configured to contact the workpiece.

2. The multi-axis deep rolling tool for deep rolling a workpiece according to claim 1, wherein the multi-axis measurement unit comprises:
a base plate attached to the adaptor plate;
a pivot plate attached to the adaptor plate;
a central sliding pivot in operative communication between the base plate and the pivot plate, the central sliding pivot mounted within a pivot point joint formed in the base plate; and
at least one load cell mounted between the base plate and the pivot plate.

3. The multi-axis deep rolling tool for deep rolling a workpiece according to claim 2, further comprising:
a dynamic force controller in operative communication with the at least one load cell, the dynamic force controller configured to monitor rolling element applied forces to the workpiece during the deep rolling.

4. The multi-axis deep rolling tool for deep rolling a workpiece according to any of claims 1 to 3, wherein the cartridge assembly comprises:
at least one radial bearing supporting a shaft of the rolling element; and
a thrust bearing supporting the shaft of the rolling element proximate a base end of the rolling element, the base end being opposite a ball end of the rolling element.

5. The multi-axis deep rolling tool for deep rolling a workpiece according to any of claims 1 to 4, wherein the rolling element comprises:
a monolithic rod configuration having a shaft forming a solid cylinder shaped bar extending axially from a base end to a ball end.

6. The multi-axis deep rolling tool for deep rolling a workpiece according to any of claims 1 to 5, wherein the rolling element comprises:
a two-part configuration having a detachable interchangeable tooling ball inserted into a tooling ball receiver formed in a shaft proximate a ball end of the shaft, the ball end being opposite a base end of the shaft.

7. The multi-axis deep rolling tool for deep rolling a workpiece according to any of claims 1 to 6, wherein the rolling element comprises a ball tip configured to contact a target area point of contact on the workpiece, the ball tip including a spherical shape.

8. A system for deep rolling a fan blade comprising the multi-axis deep rolling tool for deep rolling a workpiece according to any of claims 1 to 7;
wherein the rolling element is configured to contact the fan blade.

9. The system for deep rolling a fan blade according to claim 8, wherein the cartridge assembly comprises a detachable cartridge holder, the detachable cartridge holder configured removable, wherein different styles of detachable cartridge holder can be substituted, the detachable cartridge holder including a rolling angle, the rolling angle formed between a rolling element axis and an arm axis.

10. The system for deep rolling a fan blade according to claim 8 or 9, wherein thrust bearing being configured for rotation of the shaft about a shaft axis to accommodate axial bearing loads as the rolling element presses against a point of contact on the fan blade, the shaft being configured to rotate within the at least one radial bearing and the thrust bearing around the shaft axis.

11. A process for forming a multi-axis deep rolling tool for deep rolling a workpiece comprising:
forming a roller tool comprising an adaptor plate;
attaching a multi-axis measurement unit to the adaptor plate;
attaching an arm mount to the multi-axis measurement unit;
attaching an arm to the arm mount, the arm comprising an adapter end proximate the arm mount, the arm comprising a roller end opposite the adapter end;
attaching a cartridge assembly to the arm proximate the roller end, the cartridge assembly including a rolling element insertable within the cartridge assembly, the rolling element configured to contact the workpiece.

12. The process of claim 11, wherein forming the multi-axis measurement unit comprises:
forming a base plate;
attaching the base plate to the adaptor plate;
attaching a pivot plate to the adaptor plate;
locating a central sliding pivot in operative communication between the base plate and the pivot plate;
mounting the central sliding pivot within a pivot point joint formed in the base plate; and
mounting at least one load cell between the base plate and the pivot plate.

13. The process of claim 11 or 12,
further comprising:
connecting a dynamic force controller in operative communication with the at least one load cell, the dynamic force controller configured to monitor rolling element applied forces to the workpiece during the deep rolling; and/or
further comprising:
supporting a shaft of the rolling element with at least one radial bearing; and
supporting the shaft of the rolling element with a thrust bearing proximate a base end of the rolling element, the base end being opposite a ball end of the rolling element.

14. The process of any of claims 11 to 13,
further comprising:
forming the rolling element comprising:
forming a monolithic rod configuration having a shaft forming a solid cylinder shaped bar extending axially from a base end to a ball end; and/or further comprising:
forming the rolling element comprising:
forming a two-part configuration having a detachable interchangeable tooling ball inserted into a tooling ball receiver formed in a shaft proximate a ball end of the shaft, the ball end being opposite a base end of the shaft.

15. The process of any of claims 11 to 14,
further comprising:
forming the rolling element comprising:
forming a ball tip configured to contact a target area point of contact on the workpiece, the ball tip including a spherical shape.
